(19) **Europäisches Patentamt**

**European Patent Office**

**Office européen des brevets**

(11) Veröffentlichungsnummer: **0 371 294 B1**

(12) **EUROPÄISCHE PATENTSCHRIFT**

(45) Veröffentlichungstag der Patentschrift: **14.12.94**

(51) Int. Cl.⁵: **C08G 18/36**, C08G 18/48, C08G 18/66, H01B 3/30

(21) Anmeldenummer: **89120764.9**

(22) Anmeldetag: **09.11.89**

(54) **Verwendung von Polyurethanmassen zur Herstellung von glasfaserhaltigen Laminaten.**

(30) Priorität: **22.11.88 DE 3839334**

(43) Veröffentlichungstag der Anmeldung:
**06.06.90 Patentblatt 90/23**

(45) Bekanntmachung des Hinweises auf die Patenterteilung:
**14.12.94 Patentblatt 94/50**

(84) Benannte Vertragsstaaten:
**AT BE CH DE ES FR GB IT LI NL**

(56) Entgegenhaltungen:
**EP-A- 0 269 962      DE-A- 1 900 867**
**FR-A- 1 194 187      GB-A- 953 357**
**GB-A- 1 391 066      US-A- 2 994 674**
**US-A- 3 546 148**

(73) Patentinhaber: **BAYER AG**

**D-51368 Leverkusen (DE)**

(72) Erfinder: **Hess, Bernhard, Dr.**
**Kaldenhausenerstrasse 84**
**D-4130 Moers 2 (DE)**
Erfinder: **Prater, Klaus, Dr.**
**Bodelschwinghstrasse 22**
**D-4150 Krefeld 1 (DE)**
Erfinder: **Heine, Heinrich**
**Müritzstrasse 38**
**D-5090 Leverkusen 1 (DE)**
Erfinder: **Franke, Joachim, Dr.**
**An der Ruthen 2**
**D-5000 Köln 80 (DE)**
Erfinder: **Jakob, Hans-Dieter**
**Burscheider Strasse 223**
**D-5090 Leverkusen 3 (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft die Verwendung einer porenfreien Polyurethanmasse, die durch Umsetzung eines Polyisocyanats mit einem Polyol in Abmischung mit einem Polyetherpolyol hergestellt wild, zur Herstellung von glasfaserhaltigen Laminaten.

Glasfaserhaltige Laminate aus Polyisocyanaten und handelsüblichen Polyetherpolyolen sind blasig und infolgedessen unbrauchbar.

Auch durch sorgfältiges Trocknen der Glasfasern und der Polyetherpolyole und die Mitverwendung von Wasser absorbierenden Mitteln läßt sich die Blasenbildung nicht verhindern.

Gegenstand der Erfindung ist die Verwendung einer porenfreien Polyurethanmasse, die durch Umsetzung eines Polyisocyanats mit einem Polyol P in Abmischung mit einem Polyetherpolyol A2 hergestellt wird, wobei das Polyol P ein partieller Carbonsäureester aus einer Carbonsäure mit Glycerin, Trimethylolpropan und Pentaerythrit ist und das Polyetherpolyol A2 ein durch Alkoxylierung eines wenigstens dreiwertigen Alkohols mit einem Molgewicht von 92 bis 250 mit einem Alkylenoxid ist, wobei die Polyolmischung aus P und A2 eine OH-Zahl von 150 bis 650 und einen Fettsäuregehalt von 0,1 bis 0,4 Mol pro 100 g Polyolmischung (P + A2) aufweist, zur Herstellung von glasfaserhaltigen Laminaten.

Bevorzugte Carbonsäuren sind Fettsäuren mit 6 bis 24 C-Atomen, die auch Doppelbindungen enthalten können, wie z.B. Hexan-, Heptan-, Octan-, Nonan-, Decan-, Dodecan-, Hexadecan- oder Octadecansäure in der verzweigten oder unverzweigten Form oder aus natürlichen Ölen gewonnene Fettsäuregemische, wie die bekannten Fettsäuregemische aus Sojaöl, Rizinusöl, Kokosnußöl, Safloröl, Sonnenblumenöl, Tallöl oder Erdnußöl.

In einer bevorzugten Ausführungsform werden pro Mol Polyol P 1 bis 2 Mol Carbonsäure insbesondere Fettsäure verestert.

Die Polyole P können auch hergestellt werden durch Umesterung von natürlichen Ölen mit zusätzlichen Polyolen, gegebenenfalls unter Mitverwendung gebräuchlicher Umesterungskatalysatoren.

Da die erfindungsgemäß zu verwendenden Polyole P je nach eingesetzter Fettsäure und Menge als klare oder trübe, fließfähige oder halbfeste bis feste Massen anfallen, die sich leicht in flüssigen handelsüblichen Polyetherpolyolen lösen, werden diese bevorzugt in einer solchen Abmischung mit bis zu 50 Gew.-% eingesetzt. In diesen Mischungen können weitere Alkohole wie Trimethylol-ethan oder -propan, Pentaerythrit, Sorbit oder Mannit in untergeordneten Mengen gelöst sein.

Erfindungsgemäß werden als Polyole P solche eingesetzt, die erhältlich sind durch Reaktion der Carbonsäure mit einem Alkohol mit einem Molekulargewicht von 92 bis 250, wobei das so erhaltene Polyol P gelöst ist in einem Polyetherpolyol mit einem Molekulargewicht von 224 - 850 aus einem alkoxylierten Alkohol mit einem Molekulargewicht von 92 bis 250.

Erfindungsgemäß hat die Mischung aus P und A 2 eine OH-Zahl von 150 bis 650 und einen Fettsäuregehalt von 0,1 bis 0,4 Mol pro 100 g Mischung aus P und A 2.

Von den handelsüblichen Polyetherpolyolen, die im Kunststoff-Handbuch, Band 7 "Polyurethane", Seite 15, 42, 55 ff. beschrieben sind, sind diejenigen bevorzugt, die eine OH-Zahl >200 besitzen.

Beispiele hierfür sind Trishydroxypropyltrimethylolpropan, Trishydroxyethyltrimethylolpropan, Phthalsäurebisdiethylenglykolester und andere in technischer Qualität. In untergeordneten Mengen können auch solche mit niedrigeren OH-Zahlen, wie z.B. Rizinusöl, zugesetzt werden.

Die erfindungsgemäßen Abmischungen der Polyole P mit handelsüblichen Polyetherpolyolen und gegebenenfalls noch gelösten Alkoholen sollen OH-Zahlen von 150 bis 650 und einen Fettsäuregehalt von 0,1 bis 0,4 Mol pro 100 g Polyolmischung aufweisen.

Bei den Polyisocyanaten I handelt es sich um beliebige organische Polyisocyanate der aus der Polyurethanchemie an sich bekannten Art. Geeignet sind beispielsweise aliphatische, cycloaliphatische, araliphatische, aromatische und heterocyclische Polyisocyanate, wie sie z.B. von W. Siefken in Justus Liebigs Annalen der Chemie, 562, Seiten 75 bis 136, beschrieben werden, insbesondere der Formel

$$Q(NCO)_n,$$

in der
n = 2-4, vorzugsweise 2,
und
Q einen aliphatischen Kohlenwasserstoffrest mit 2-18, vorzugsweise 6-10 C-Atomen,
einen cycloaliphatischen Kohlenwasserstoffrest mit 4-15, vorzugsweise 5-10 C-Atomen,
einen aromatischen Kohlenwasserstoffrest mit 6-15, vorzugsweise 6-13 C-Atomen,
oder einen araliphatischen Kohlenwasserstoffrest mit 8-15, vorzugsweise 8-13 C-Atomen bedeuten.

Besonders bevorzugte Isocyanate I sind 4,4′-Diisocyanatodiphenylmethan bzw. dessen technische Gemische mit 2,4′- und gegebenenfalls 2,2′-Diisocyanatodiphenylmethan, Polyisocyanatgemische der Diphenylmethanreihe, wie sie durch Phosgenierung von Anilin/Formaldehyd-Kondensaten in an sich bekannter Weise gewonnen werden, und die neben den genannten Diisocyanaten wechselnde Mengen an höheren Homologen enthalten, 2,4-Diisocyanatotoluol und seine technischen Gemische mit bis zu 35 Gew.-%, bezogen auf Gesamtgemisch an 2,6-Diisocyanatotoluol, Hexamethylendiisocyanat, 1-Isocyanato-3,3,5-trimethyl-5-isocyanatomethylcyclohexan (Isophorondiisocyanat), Urethan-, Carbodiimid-, Isocyanurat-, Allophanat- oder Biuret-modifizierte Polyisocyanate auf Basis der genannten unmodifizierten Polyisocyanate oder beliebige Gemische der beispielhaft genannten Polyisocyanate. Vorzugsweise werden die entsprechenden, bei Raumtemperatur flüssigen Polyisocyanate verwendet. Besonders bevorzugt werden als organische Polyisocyanate die Phosgenierungsprodukte von Anilin/Formaldehyd-Kondensaten verwendet.

Zur Herstellung der Formmassen werden die Polyole P oder deren beschriebene Abmischungen mit Polyetherpolyolen mit den Polyisocyanaten vermischt und vorzugsweise mit der Mischung Glasfasermatten oder Gewebe getränkt. Hierbei liegt das Äquivalenzverhältnis von Isocyanatgruppen zu Hydroxylgruppen im allgemeinen bei 0,75:1 bis 1,25:1, vorzugsweise bei 0,9:1 bis 1,1:1.

Den Formmassen können gewünschtenfalls übliche Zusatzmittel zugesetzt werden. Hierzu gehören beispielsweise Zeolith (wasserfrei) in einer Menge von bis zu 5 Gew.-%, bezogen auf Gesamtgemisch, Füllstoffe wie gemahlenes Gesteinsmehl, Kurzglasfasern, Polyethylenpulver oder sonstige anorganische oder organische Füllstoffe, Pigmente oder aus der Polyurethanchemie an sich bekannte Beschleuniger.

Die Formmassen weisen im allgemeinen bei Raumtemperatur eine Topfzeit von 0,25 bis 10 Stunden auf und härten bei Raumtemperatur innerhalb eines Zeitraums von 2 bis 24 Stunden zu blasenfreien Kunststoffen aus, wobei die Topf- und Aushärtezeit insbesondere durch die An- bzw. Abwesenheit von Beschleunigern für die Isocyanat-Polyadditionsreaktion bestimmt wird. Gewünschtenfalls kann diese Zeit durch Temperaturerhöhung wesentlich verkürzt werden.

Die folgenden Beispiele und Vergleichsbeispiele erläutern die Erfindung.

Kennzeichnung der benutzten Abkürzungen:

TMP: Trimethylolpropan
Poly-EO 1: Polyetherpolyol aus TMP und Propylenoxid OH-Zahl: 550
Poly-EO 2: Polyetherpolyol aus TMP und Propylenoxid OH-Zahl 380
Poly-IC 1: Diphenylmethandiisocyanat, technisches Isomerengemisch; NCO-Gehalt: 30 bis 32 % Viskosität (25 °C): 110 mPa.s
Poly-IC 2: Diphenylmethandiisocyanat, technisches Isomerengemisch; NCO-Gehalt: 30 bis 32 % Viskosität (25 °C): 200 mPa.s
Poly-IC 3: Destilliertes Diphenylmethandiisocyanat, Isomerengemisch; NCO-Gehalt: 33 %; Viskosität (25 °C): 15 mPa.s
Poly-IC 4: Präpolymer auf Basis Isophorondiisocyanat und propoxyliertem Trimethylolpropan mit freien NCO-Gruppen, NCO-Gehalt: 33 % Viskosität (25 °C): 100 mPa.s
Poly-IC 5: Präpolymer auf Basis Diphenylmethandiisocyanat und propoxyliertem Bisphenol A mit freien NCO-Gruppen, NCO-Gehalt: 25 %; Viskosität (25 °C): 550 mPa.s
Baylith®-Paste: Zeolith, angeteigt mit Rizinusöl (1:1)

Herstellung der erfindungsgemäß zu verwendenden Polyole A bis D:

Die in Tabelle I aufgeführten Veresterungskomponenten wurden zusammen in einen Rührkolben mit absteigendem Destillationsaufsatz eingewogen und in klassischer Weise unter Stickstoffbegasung so lange bei 220 °C verestert, bis die angegebenen Kennzahlen erreicht waren. Polyol D wurde durch Umesterung bei 260 °C hergestellt.

## Tabelle I

(Angaben in g)

| Polyol: | A |
|---|---|
| TMP | 134 |
| Glycerin | - |
| Sojaölfettsäure | 222 |
| Isononansäure | 32 |
| Erdnußölfettsäure | - |
| Sojaöl | - |
| Säurezahl (mg KOH/g) | 2 |
| OH-Zahl, Acetyl. (mg KOH/g) | 320 |
| Visk. (20° C), mPa.s | 250 |

Herstellung von Laminaten aus den erfindungsgemäßen Polyolen und Polyisocyanaten (Beispiele und Vergleiche)

Zur Herstellung von Laminaten wurde Glasfasergewebe der Fa. Interglas, Ulm, Typ 92140 mit einem Flächengewicht von 390 g/m² benutzt.

Präparation der Laminate:

In einem Polyethylenbecher wurden jeweils die in Tabelle II aufgeführten Polyole mit Baylith®-Paste (Zeolith-Typ) gut vermischt und anschließend die aufgeführten Mengen an Diisocyanat so lange eingerührt, bis eine sichtbare Verfärbung von hellbeige nach dunkelbraun die Verträglichkeit anzeige.

Von dem Ansatz wurde ein Teil auf eine Glasplatte (20 x 20 cm), die vorher mit einem Trennmittel (Wachs) beschichtet worden war, gegossen und die Masse mit einem Pinsel verteilt. Auf diese erste Harzschicht wurde die erste Lage Glasfasergewebe gelegt und mit einem Rakel angedrückt und entlüftet. Durch zusätzliches Aufgießen von Harz und Eintupfen mit einem Pinsel wurde die vollständige Benetzung und Durchtränkung des Glasfasergewebes erreicht. Diese Verfahrensweise wurde mehrmals wiederholt, so daß Laminate mit 3 bis 5 Lagen Glasfasergewebe entstanden. Die Aushärtung erfolgte 24 Stunden bei Raumtemperatur. Die optische Begutachtung der Laminate nach dieser Zeit sowie die Glastemperatur (DSC-Methode nach DIN 51 005) sind in Tabelle II aufgeführt.

Die Tabelle II zeigt deutlich, daß porenfreie und harte Laminate nur bei Verwendung der erfindungsgemäßen Polyole herstellbar sind, während die Vergleichsversuche nur geschäumte Laminate liefern.

Tabelle II

| Beispiel | Polyol | Gew.-Tl. Polyol | Gew.-Tl. Baylith®-Paste | Polyisocyanat | Gew.-Tl. Polyisocyanat | Beurteilung der Laminate nach 24 h bei Raumtemperatur | TG (DSC) |
|---|---|---|---|---|---|---|---|
| 1 | A EO1 | 90 10 | 10 | IC1 | 83 | langsame Durchhärtung Einwandfrei, hart, gut durchtränkt | $69^0$ |
| 2 | A EO1 | 80 20 | 10 | IC1 | 89 | Einwandfrei, hart, gut durchtränkt | $62^0$ |
| 3 | A EO1 | 70 30 | 10 | IC1 | 95 | Einwandfrei, hart, gut durchtränkt | $66^0$ |
| 4 | A EO2 | 90 10 | 10 | IC1 | 79 | Einwandfrei, zähhart, gut durchtränkt | $68^0$ |
| 5 | A EO2 | 80 20 | 10 | IC1 | 81 | Einwandfrei, zähhart, gut durchtränkt | $76^0$ |

Tabelle II - Fortsetzung

| Beispiel | Polyol | Gew.-Tl. Polyol | Gew.-Tl. Baylith®-Paste | Polyisocyanat | Gew.-Tl. Polyisocyanat | Beurteilung der Laminate nach 24 h bei Raumtemperatur | TG (DSC) |
|---|---|---|---|---|---|---|---|
| 6 | A | 70 | 10 | ICl | 82 | Einwandfrei, zäh-hart, gut durchtränkt | 62° |
|  | EO2 | 30 |  |  |  |  |  |
| Vergleichsversuche: |  |  |  |  |  |  |  |
| V1 | EO2 | 100 | 10 | ICl | 100 | stark geschäumt, porig, hart |  |
| V2 | EO1 | 100 | 10 | ICl | 137 | stark geschäumt, porig, hart |  |

Herstellung von Laminatplatten für mechanische Prüfungen:

Die Präparation erfolgte wie zuvor beschrieben, jedoch diente als Unterlage eine polierte Eisenplatte, die mit einer Trennfolie abgedeckt war und auf der ein Rahmen aus 4 mm dicken Eisenstäben als Abstandhalter lag. Das Laminat aus 14 Lagen Glasfasergewebe wurde mit einer Abdeckfolie abgedeckt, die eingeschlossene Luft und überschüssiges Harz ausgerollt, das fertige Laminat mit einer zweiten polierten Eisenplatte abgedeckt und unter Druck 4 bis 5 Stunden bei Raumtemperatur aushärten gelassen; die Prüfung erfolgte nach 7 Tagen. An ausgeschnittenen Prüfkörpern wurden die in Tabelle III zusammengestellten Werte ermittelt.

Tabelle III

| Rezeptur | Beispiel 14 | Beispiel 15 |
|---|---|---|
| Polyol A | 100 Gew.-Tl. | 70 Gew.-Tl. |
| Poly-EO1 | - | 30 Gew.-Tl. |
| Baylith®-Paste | 10 Gew.-Tl. | 10 Gew.-Tl. |
| Poly-IC1 | 77 Gew.-Tl. | 95 Gew.-Tl. |
| Cobalt-Octoat-Lösung (8 % Co-Metall) | 0,1 Gew.-Tl. | - |
| Glasgehalt (Gew.-%) | 72,5 | 69,5 |
| Biegefestigkeit (N/mm$^2$) | 239 | 307 |
| E-Modul (N/mm$^2$) | 15012 | 16915 |
| Zugfestigkeit (N/mm$^2$) | 354 | 320 |
| Schlagzähigkeit (KJ/m$^2$) | 145 | 129 |

**Patentansprüche**

1. Verwendung einer porenfreien Polyurethanmasse, die durch Umsetzung eines Polyisocyanats mit einem Polyol P in Abmischung mit einem Polyetherpolyol A2 hergestellt wird, wobei das Polyol P ein partieller Carbonsäureester aus einer Carbonsäure mit Glycerin, Trimethylolpropan und Pentaerythrit ist und das Polyetherpolyol A2 ein durch Alkoxylierung eines wenigstens dreiwertigen Alkohols mit einem Molgewicht von 92 bis 250 mit einem Alkylenoxid ist wobei die Polyolmischung aus P und A2 eine OH-Zahl von 150 bis 650 und einen Fettsäuregehalt von 0,1 bis 0,4 Mol pro 100 g Polyolmischung (P + A2) aufweist, zur Herstellung von glasfaserhaltigen Laminaten.

**Claims**

1. The use of a pore-free polyurethane compound obtained by reaction of a polyisocyanate with a polyol P in admixture with a polyether polyol A2, the polyol P being a partial carboxylic acid ester of a carboxylic acid with glycerol, trimethylol propane and pentaerythritol and the polyether polyol A2 being obtainable by alkoxylation of an at least trihydric alcohol having a molecular weight of 92 to 250 with an alkylene oxide, the polyol mixture of P and A2 having an OH value of 150 to 650 and a fatty acid content of 0.1 to 0.4 mol per 100 g of polyol mixture (P + A2),
for the production of glass-fiber-containing laminates.

**Revendications**

1. Utilisation d'une composition de polyuréthane sans pores, qui a été produite par la réaction d'un polyisocyanate avec un polyol P en mélange avec un polyétherpolyol/A2, le polyol P étant un ester partiel d'acide carboxylique obtenu à partir d'un acide carboxylique avec du glycérol, du triméthylolpropane et du pentaérythritol, et le polyétherpolyol A2 étant un produit obtenu par alcoxylation d'un alcool au moins trivalent (au moins un triol) ayant un poids molaire de 92 à 250 avec un oxyde d'alkylène, le mélange des polyols formé à partir de P et de A2 ayant un indice de OH de 150 à 650, une teneur en acide gras de 0,1 à 0,4 mol pour 100 g du mélange des polyols (P + A2), pour produire des stratifiés contenant de la fibre de verre.